# EUROPEAN PATENT SPECIFICATION

(11) **EP 4 465 555 B1**
(45) Date of publication and mention of the grant of the patent: **28.01.2026**
(21) Application number: 23173685.1
(22) Date of filing: 16.05.2023
(51) Int. Cl.: H04B 10/70

(54) **CALIBRATION SYSTEM FOR CALIBRATING A QKD EMITTER**
QUANTENSCHLÜSSELVERTEILUNGSKALIBRIERUNGSAUFBAU UND VERFAHREN DAFÜR
CONFIGURATION D'ÉTALONNAGE DE DISTRIBUTION DE CLÉ QUANTIQUE ET PROCÉDÉ ASSOCIÉ

(43) Date of publication of application: 20.11.2024
(73) Proprietor: ID Quantique S.A., 1227 Genève (CH)
(72) Inventor: STUCKI, Damien, 1227 Carouge (CH); BOSO, Gianluca, 1213 Petit-Lancy (CH)
(74) Representative: KATZAROV S.A.

(56) References cited:
- GUI Y ET AL: "Metrology Challenges in Quantum Key Distribution", JOURNAL OF PHYSICS: CONFERENCE SERIES, INSTITUTE OF PHYSICS PUBLISHING, GB, vol. 2416, no. 1, 1 December 2022 (2022-12-01), XP020440451, ISSN: 1742-6588, [retrieved on 20221201], DOI: 10.1088/1742-6596/2416/1/012005
- CHUNNILALL C J ET AL: "Traceable metrology for characterizing quantum optical communication devices", METROLOGIA, INSTITUTE OF PHYSICS PUBLISHING, BRISTOL, GB, vol. 51, no. 6, 20 November 2014 (2014-11-20), XP020273788, ISSN: 0026-1394, [retrieved on 20141120], DOI: 10.1088/0026-1394/51/6/S258
- "Quantum Key Distribution (QKD); [Component characterisation: characterising optical components for QKD systems] ;GS QKD 011", ETSI DRAFT; GS QKD 011, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - QKD, no. V0.0.2, 26 January 2015 (2015-01-26), pages 1 - 92, XP014232145, [retrieved on 20150126]
- "Quantum Key Distribution (QKD) Characterisation of Optical Output of QKD transmitter modules", vol. ISG QKD Quantum Key Distribution, no. V0.0.2, 4 June 2018 (2018-06-04), pages 1 - 52, XP014312356, Retrieved from the Internet <URL:docbox.etsi.org/ISG/QKD/70-Drafts/0013TransModChar/QKD-0013_TransModCharv002.pdf> [retrieved on 20180604]

## Description

### Technical Field

The present invention relates to the field of calibration setups for quantum key distribution and more particularly to a device and a method for calibrating a quantum key distribution system. Even more particularly it relates to a device and a method for calibrating a quantum key distribution emitter.

### Background of the art

In recent years, quantum cryptography has been proven as being one the most reliable techniques in secure information exchange technology. Among the several techniques, Quantum Key Distribution has been shown to be one of the most promising.

The primary goal of Quantum Key Distribution (QKD) is to be able to share between an emitter and a receiver a sequence of bits whose privacy can be proven with a limited set of assumptions.

Quantum Key Distribution (QKD) is a method allowing the distribution of a secret key between two distant parties, the emitter and the receiver, with a provable security. The two parties encode the key on elementary quantum systems, such as photons, which they exchange over a quantum channel, such as an optical fiber or a free space link. The security of this method comes from the well-known fact that the measurement of the quantum state of an unknown quantum system modifies the system itself. In other words, a spy eavesdropping on the quantum communication channel cannot get information on the key without introducing errors in the key exchanged between the emitter and the receiver. Equivalently, QKD is secure because of the no-cloning theorem of quantum mechanics, which ensures that a spy cannot duplicate the transmitted quantum system and forward a perfect copy to the receiver.

During the manufacturing of a QKD system, the transmitter or emitter (usually called Alice) needs to be tuned and characterized. One of the steps of this process is to tune and characterize the intensity, the temporal and spectral shape of the optical pulses generated by the laser placed inside Alice. In particular, the calibration aims at defining the parameters of the light signal outputted by Alice, such as wavelength, the number of photons per pulse µ0, the levels of decoy µ1 and µ2, and the FWHM of the output beam.

Hence, an important step is to characterize the light source, i.e. the current and the temperature of the laser as well as its wavelength, intensity levels, FWHM of the signal, phase modulation or the same, which is not possible without amplifying the signal of the laser in the correct way. In fact, given the typical losses of a QKD emitter, even without adding optical attenuators, the signal generated is too low to be measured by standard lab equipment
A skilled person in the art will try to plug standard equipment at the output of Alice to perform the calibration but due to such low signals he would not be able to perform any measurements. Even if he tries to add a commonly available optical amplifier at the output of Alice (with a typical amplification gain of 20-30 dB), this will add so much noise that the noise will be higher than the signal, and the calibration cannot be performed.

Therefore, it is known in the art to characterize the emitter with a single-photon detector (SPD) combined with either a TDC (time-to-digital converter) or a counter and other standard optical equipment such as fixed or tunable optical filters, couplers, interferometers etc. However, apart from the inconvenience that SPDs are non-standard equipment which are known only by few experts - hence not every skilled person in the art will know how to use them - the procedure is also slow as there is the need to integrate the signal for a long time before having a meaningful measurement. In addition, the results need to be interpreted not being real-time. Thus, resulting in a slow and not practical testing method.

Alternatively, the emitter is not calibrated at all, which means that only the single components of the emitter, which need mandatorily to be calibrated, are characterized but not the whole system. This is done with the use of the QKD receiver, but it transforms the calibration into a statistical analysis. Hence being slow and complex. In addition to the problem of the statistical analysis mentioned above, when one performs unit tests on the single components but not on the Alice Assembly, one discovers faulty Alice assemblies only when one tests the entire QKD system instead of during the fabrication of the Alice module.

In view of the above, one can see that the problem associated with the calibration performed with an SPD combined with a TDC is that it is slow and not practical, having only a few experts capable of using this non-standard equipment. Also, the problem associated with not testing the emitter as whole but by using the QKD receiver indeed transforms the calibration into a statistical analysis, hence being slow, and in addition devoted only to few components of the emitter preventing to measure possible failures in the emitter system.

There is therefore a need for such a solution for speeding up and simplifying the calibration of a QKD emitter.

In this regard, a primary object of the invention is to provide a device and a method for easily, rapidly, and reliably calibrating a quantum key distribution emitter.

### Summary of the invention

The above problems are solved by the present invention which is defined in the claims.

### Brief description of the drawings

Further particular advantages and features of the invention will become more apparent from the following non-limitative description of at least one embodiment of the invention which will refer to the accompanying drawings, wherein
- Figure 1 represents a conventional QKD emitter,
- Figure 2 represents a calibration Setup for a standard QKD emitter,
- Figure 3A and 3B represent a QKD emitter of the present invention,
- Figure 4 represents a calibration setup for a QKD emitter of the present invention.

### Detailed description of the invention

The present detailed description is intended to illustrate the invention in a non-limitative manner since any feature of an embodiment may be combined with any other feature of a different embodiment in an advantageous manner.

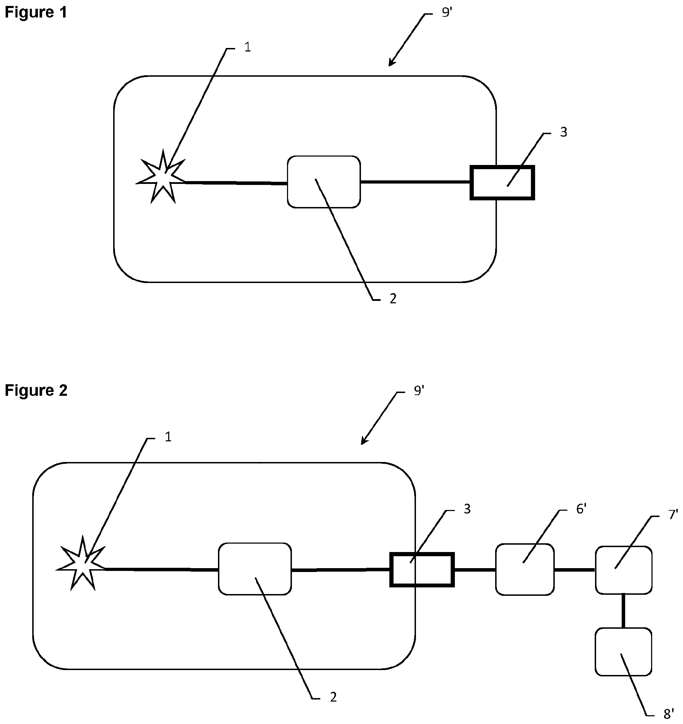

Figure 1 shows a conventional QKD emitter which comprises a laser source 1, an encoder stage 2 and an output connector 3, wherein the encoder stage 2 preferably comprises among others at least one of modulation optics and an attenuator so as to be able to carry out the QKD protocol. In addition to that, Figure 2 shows a conventional QKD emitter calibration setup using a single-photon detector (SPD) 6' combined with a time-to-digital converter (TDC) 7' connected to a computer 8'.

As we can see, the standard QKD emitter does not give internal access to the light path and needs to be calibrated with a sensitive outside setup (SPD + TDC) giving rise to the drawbacks explained above.

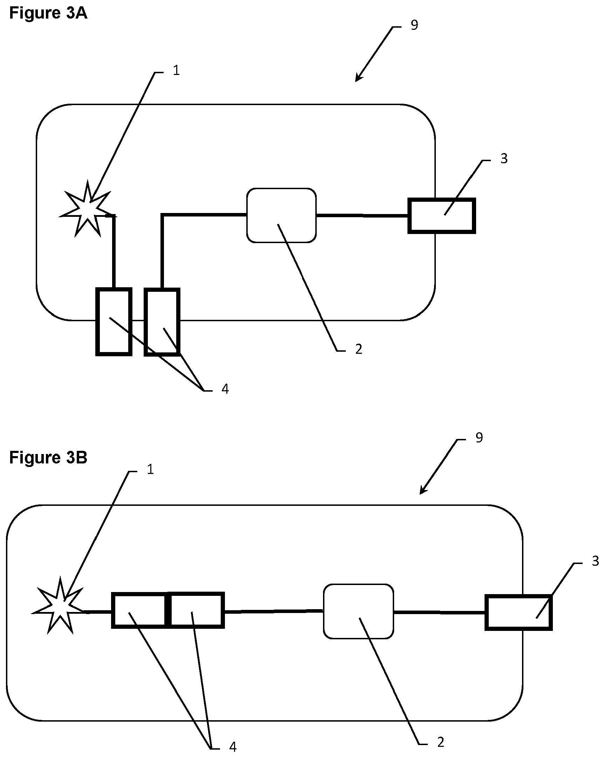

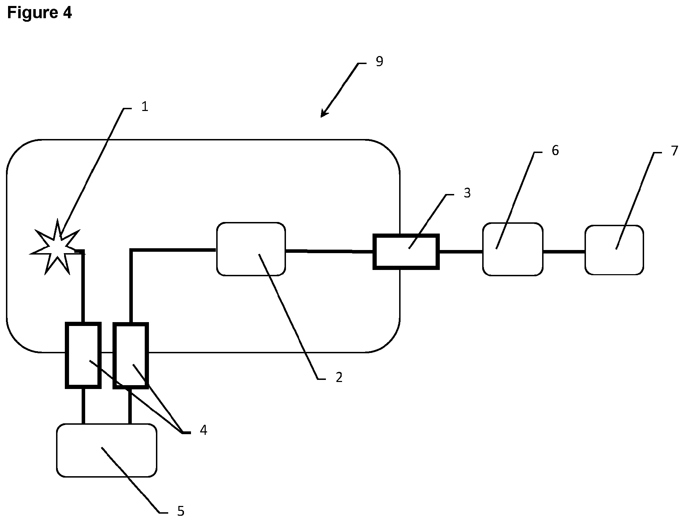

In order to solve these problems, the present invention is shown in figures 3A, 3B and 4 schematically representing a QKD emitter also comprising a laser source 1, encoder stage 2 and an output connector 3 and is further provided with at least one, preferably an additional pair of, switchable connectors 4, between the laser source 1 and encoder stage 2.

The encoder stage may comprise either active or passive modulation optics such as an intensity modulator or a phase modulator. Furthermore, it may comprise passive optical components such as an optical filter, an interferometer, or a coupler. The encoder stage may also include a variable and/or fixed attenuator that serves to attenuate the signal down to single-photon level. The above list is not limitative as the list and the order of these components vary depending on the specific implementation and protocol.

This pair of switchable connectors 4 is adapted to be switched between two positions shown in figures 3A and 3B, respectively. Figure 3A shows the emitter 9 with the connector 4 in the first position where the connector 4 is exposed to the outside of the QKD emitter for calibration and Figure 3B shows the emitter 9 with the connector 4 in the second position where the connector 4 is internally connected for normal operation.

While this is not represented in the figures, it has to be noted that an actuation system can be provided to automatize the connectors switch.

The QKD emitter 9 permits, thanks to the connector 4 to install an optical amplifier 5 between the laser source 1 and the encoder stage 2 during calibration, boosting the optical output power of the emitter 9 in order to use a standard telecom characterization setup made of a photodiode and an oscilloscope to measure the temporal or spectral shape of the light signal coming out of the emitter 9, as shown in Figure 4 representing the calibration setup for a QKD emitter according to the present invention.

Given the low light levels in play, in some specific cases the photodiode is an amplified photodiode that can additionally boost the output signal. This is only required depending on the intrinsic losses of the QKD emitter.

Preferably, the bandwidth of the amplified photodiode is higher than 10 GHz. This permits to enhance the setup because the typical signals to be measured in a QKD system can be shorter than a few hundred picoseconds and so to measure them correctly such bandwidths are preferred. On the other hand, a lower-speed QKD system does not need such bandwidth.

With this calibration setup it is possible to provide an instrument (such as an oscilloscope or an optical spectrum analyzer) capable of reading the signal from the photodiode and that can be used to perform the calibration procedure. The typical calibration procedure of a QKD emitter consists in measuring the temporal and/or spectral shape of the light coming out of the emitter to measure different parameters like: FWHM of the pulses, shape of the pulses, intensity with time of the pulses, distance between the pulses, emission spectrum of the pulses and then calibrate the emitter in function of the results.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modificastions, equivalents and variations that are within the scope of this disclosure, as defined by the appended claims.

This for example is particularly the case regarding the different apparatuses which can be used.

### List of references

9 QKD Emitter
1 Laser source
2 Encoder stage
3 Output connector
4 Calibration connector
5 Amplifier
6 Photodiode
7 Oscilloscope
9' Conventional QKD Emitter
6' SPD
7' TDC
8' Computer

## Claims

1. A calibration system for calibrating a QKD emitter (9) comprising
said QKD emitter (9) provided with a light source (1) for generating light and an output connector (3) for exiting the generated light, and
a telecom characterization setup (6, 7) comprising an oscilloscope or an optical spectrum analyzer, located at the output connector (3),
**characterized in that** the calibration system further comprises
at least one switchable connector (4) adapted to be switched between a first position where the switchable connector (4) is exposed to the outside of the QKD emitter (9) and a second position where the switchable connector (4) is internally connected for providing a light path from the light source (1) to the output connector (3), and
an optical amplifier (5) connected to the switchable connector (4) switched in the first position for calibration procedure, thereby providing a light path from the light source (1) to the output connector (3).

2. The calibration system according to claim 1, **characterized in that** the optical amplifier (5) is an Erbium-Doped Fiber Amplifier (EDFA).

3. The calibration system according to claim 1 or claim 2, **characterized in that** the standard telecom characterization setup comprises a photodiode (6) and the oscilloscope or the optical spectrum analyzer is an acquisition system capable (7) to read the signal of the photodiode (6).

4. The calibration system according to claim 3, **characterized in that** the photodiode (6) is an amplified photodiode.

5. The calibration system according to claim 4, **characterized in that** the amplified photodiode (6) is a high-speed photodiode with a bandwidth higher than 10 GHz.

6. The calibration system according to any one of claims 1 to 5, **characterized in that** the QKD emitter (7) further comprise an encoder stage (2).

7. The calibration system according to claim 6, **characterized in that** the encoder stage (2) comprises at least one of active or passive modulation optics such as an intensity modulator and/or a phase modulator.

8. The calibration system according to claim 6 or 7, **characterized in that** the encoder stage (2) comprises at least a fixed and/or variable optical attenuator.

9. The calibration system according to any one of claims 6 to 8, **characterized in that** the at least one switchable connector comprises a pair of switchable connectors (4).

10. The calibration system according to claim 9, **characterized in that** the pair of switchable connectors (4) is disposed between the light source (1) and the encoder stage (2).

## Patentansprüche

1. Kalibrierungssystem zum Kalibrieren eines QKD-Senders (9), umfassend den QKD-Sender (9), der mit einer Lichtquelle (1) zum Erzeugen von Licht und einem Ausgangsverbinder (3) für den Austritt des erzeugten Lichts versehen ist, und
einen Telekom-Charakterisierungs-Aufbau (6, 7), umfassend ein Oszilloskop oder einen optischen Spektralanalysator, der sich an dem Ausgangsverbinder (3) befindet,
**dadurch gekennzeichnet, dass** das Kalibrierungssystem ferner umfasst:
zumindest einen schaltbaren Verbinder (4), der dazu geeignet ist, zwischen einer ersten Position, in welcher der schaltbare Verbinder (4) der Außenseite des QKD-Senders (9) ausgesetzt ist, und einer zweiten Position umgeschaltet zu werden, in welcher der schaltbare Verbinder (4) intern verbunden ist, um eine Lichtstrecke von der Lichtquelle (1) zu dem Ausgangsverbinder (3) bereitzustellen, und
einen optischen Verstärker (5), der mit dem schaltbaren Verbinder (4) verbunden ist, der für die optische Kalibrierung in die erste Position geschaltet ist, wodurch eine Lichtstrecke von der Lichtquelle (1) zu dem Ausgangsverbinder (3) bereitgestellt wird.

2. Kalibrierungssystem nach Anspruch 1, **dadurch gekennzeichnet, dass** der optische Verstärker (5) ein Erbium-dotierter Faserverstärker (EDFA) ist.

3. Kalibrierungssystem nach Anspruch 1 oder Anspruch 2, **dadurch gekennzeichnet, dass** der standardmäßige Telekom-Charakterisierungs-Aufbau eine Fotodiode (6) umfasst und das Oszilloskop oder der optische Spektralanalysator ein Erfassungssystem ist, das in der Lage ist (7), das Signal der Fotodiode (6) zu lesen.

4. Kalibrierungssystem nach Anspruch 3, **dadurch gekennzeichnet, dass** die Fotodiode (6) eine verstärkte Fotodiode ist.

5. Kalibrierungssystem nach Anspruch 4, **dadurch gekennzeichnet, dass** die verstärkte Fotodiode (6) eine Hochgeschwindigkeits-Fotodiode mit einer Bandbreite von mehr als 10 GHz ist.

6. Kalibrierungssystem nach einem der Ansprüche 1 bis 5, **dadurch gekennzeichnet, dass** der QKD-Sender (7) ferner eine Kodiererstufe (2) umfasst.

7. Kalibrierungssystem nach Anspruch 6, **dadurch gekennzeichnet, dass** die Kodiererstufe (2) zumindest eine aktive und/oder passive Modulationsoptik wie etwa einen Intensitätsmodulator und/oder einen A-Phasen-Modulator umfasst.

8. Kalibrierungssystem nach Anspruch 6 oder 7, **dadurch gekennzeichnet, dass** die Kodiererstufe (2) zumindest ein fixes und/oder variables optisches Dämpfungsglied umfasst.

9. Kalibrierungssystem nach einem der Ansprüche 6 bis 8, **dadurch gekennzeichnet, dass** der zumindest eine schaltbare Verbinder ein Paar von schaltbaren Verbindern (4) umfasst.

10. Kalibrierungssystem nach Anspruch 9, **dadurch gekennzeichnet, dass** das Paar von schaltbaren Verbindern (4) zwischen der Lichtquelle (1) und der Kodiererstufe (2) angeordnet ist.

## Revendications

1. Système d'étalonnage pour étalonner un émetteur QKD (9) comprenant
ledit émetteur QKD (9) pourvu d'une source lumineuse (1) pour générer de la lumière et d'un connecteur de sortie (3) pour sortir la lumière générée, et
un dispositif de caractérisation des télécommunications (6, 7) comprenant un oscilloscope ou un analyseur de spectre optique, situé au niveau du connecteur de sortie (3),
**caractérisé par le fait que** le système d'étalonnage comprend en outre
au moins un connecteur commutable (4) conçu pour être commuté entre une première position dans laquelle le connecteur commutable (4) est exposé à l'extérieur de l'émetteur QKD (9) et une deuxième position dans laquelle le connecteur commutable (4) est connecté en interne pour fournir un chemin lumineux de la source de lumière (1) au connecteur de sortie (3), et
un amplificateur optique (5) connecté au connecteur commutable (4) commuté dans la première position pour la procédure d'étalonnage, fournissant ainsi un chemin lumineux de la source lumineuse (1) au connecteur de sortie (3).

2. Le système d'étalonnage selon la revendication 1, **caractérisé par le fait que** l'amplificateur optique (5) est un amplificateur à fibre dopée à l'Erbium (EDFA).

3. Le système d'étalonnage selon la revendication 1 ou la revendication 2, **caractérisé par le fait que** le dispositif standard de caractérisation des télécommunications comprend une photodiode (6) et que l'oscilloscope ou l'analyseur de spectre optique est un système d'acquisition capable (7) de lire le signal de la photodiode (6).

4. Le système d'étalonnage selon la revendication 3, **caractérisé par le fait que** la photodiode (6) est une photodiode amplifiée.

5. Le système d'étalonnage selon la revendication 4, **caractérisé en ce que** la photodiode amplifiée (6) est une photodiode à grande vitesse avec une largeur de bande supérieure à 10 GHz.

6. Système d'étalonnage selon l'une des revendications 1 à 5, **caractérisé en ce que** l'émetteur QKD (7) comprend en outre un étage codeur (2).

7. Le système d'étalonnage selon la revendication 6, **caractérisé en ce que** l'étage codeur (2) comprend au moins une optique de modulation active ou passive telle qu'un modulateur d'intensité et/ou un modulateur de phase.

8. Le système d'étalonnage selon la revendication 6 ou 7, **caractérisé par le fait que** l'étage codeur (2) comprend au moins un atténuateur optique fixe et/ou variable.

9. Système d'étalonnage selon l'une quelconque des revendications 6 à 8, **caractérisé en ce que** le au moins un connecteur commutable comprend une paire de connecteurs commutables (4).

10. Le système d'étalonnage selon la revendication 9, **caractérisé en ce que** la paire de connecteurs commutables (4) est disposée entre la source lumineuse (1) et l'étage codeur (2).
